# EUROPEAN PATENT APPLICATION

(11) **EP 2 824 808 A2**
(43) Date of publication of application: **14.01.2015**
(21) Application number: 14173665.2
(22) Date of filing: 24.06.2014
(51) Int. Cl.: H02K 11/00, H02K 7/00

(54) **Rotating electric machine and saddle-ride type vehicle**

(30) Priority: 08.07.2013 JP 2013142840
(71) Applicant: Yamaha Hatsudoki Kabushiki Kaisha, Iwata-shi, Shizuoka 438-8501 (JP)
(72) Inventor: Furuta, Hideki, Shizuoka, 438-8501 (JP)
(74) Representative: Zimmermann, Tankred Klaus

(57) **Abstract**

A rotating electric machine suitable for use as a starter-generator of an engine of a saddle-ride type vehicle, particularly a motorcycle, is provided that achieves a size reduction.

A plurality of magnetic sensor elements (H) is incorporated in a case main body (3, 131) of a magnetic sensor unit (30, 130, 230, 330) that is configured to detect the rotational position of a rotor (20). An outer fixing portion (35, 36) for fixing the case main body (3, 131) to an engine case (2) and an inner fixing portion (37, 38) for fixing the case main body (3, 131) to a stator (10) are provided. With respect to a radial direction of the stator (10), the outer fixing portion (35, 36) is arranged outside an outer circumferential edge of the stator (10). With respect to a circumferential direction of the stator (10), the outer fixing portion (35, 36) is arranged outside, among the plurality of magnetic sensor elements (H), a magnetic sensor element located outermost with respect to the circumferential direction.

## Description

### [TECHNICAL FIELD]

The present invention relates to a rotating electric machine, particularly a rotating electric machine that is suitable for use as a starter-generator of an engine provided in various types of vehicles including motorcycles, and also relates to a saddle-ride type vehicle provided with the rotating electric machine.

### [BACKGROUND ART]

A starter-generator has been known as a rotating electric machine that is mounted to an output shaft of an engine of, for example, a motorcycle. A starter-generator of this type is configured to, at a time of engine start, function as a starter motor that rotates a crankshaft to start the engine, while after the engine start, be rotated by the crankshaft to function as a generator.

The rotating electric machine of this type includes a magnetic sensor unit that detects the angle of rotation of a rotor. For example, Japanese Patent Application Laid-Open No. 2009-240071 proposes the following rotating electric machine. The rotating electric machine proposed therein includes a rotor that is in the shape of a cylinder with a bottom and fixed to one end portion of a crankshaft of an engine. The rotor includes a bottom wall portion having a disk-like shape and a peripheral wall portion having a cylindrical shape. The peripheral wall portion extends in the axial direction of the crankshaft from the bottom wall portion toward the engine. A permanent magnet is fixed to an inner circumferential surface of the peripheral wall portion. A stator is arranged inside the peripheral wall portion of the rotor. The stator includes a core part having a cylindrical shape, a plurality of teeth, and windings. The core part is fixed to a case of the engine. The plurality of teeth extend radially outward from the core part. The plurality of teeth are arranged at a constant pitch in a circumferential direction. The windings are wound on the teeth.

A magnetic sensor unit provided in the rotating electric machine includes a case main body, an inner fixing portion, and an outer fixing portion. The inner fixing portion extends from the case main body toward the radially inside of the stator. The outer fixing portion extends from the case main body toward the radially outside of the stator so that the outer fixing portion protrudes beyond an outer circumferential edge of the stator. The case main body includes a plurality of leg parts that extend toward the stator. A magnetic sensor element is incorporated in each of the leg parts. Each of the plurality of leg parts is received between distal end portions of neighboring ones of the teeth of the stator, and in this condition, the inner fixing portion is fixed to the stator by means of a bolt while the outer fixing portion is fixed to the case of the engine by means of a bolt. In this manner, the magnetic sensor unit is arranged so as to be fixed between the rotor and the case of the engine.

The rotating electric machine provided with the above-described magnetic sensor unit is configured such that the rotational position of the permanent magnet of the rotor is detected by the magnetic sensor elements incorporated in the magnetic sensor unit and a signal of detection thereof is used to control the rotating electric machine.

### [SUMMARY OF THE INVENTION]

It is an object of the present invention to provide a rotating electric machine suitable for use as a starter-generator that is able to maintain an accuracy of detection performed by a magnetic sensor element with reduction in the size of a magnetic sensor unit.

This object is achieved by a rotating electric machine according to claim 1, and by a saddle-ride type vehicle according to claim 11.

The present invention is based on the following findings of the inventors. In the rotating electric machine proposed in Japanese Patent Application Laid-Open No. 2009-240071, the magnetic sensor unit is, in two portions thereof, namely, the inner fixing portion and the outer fixing portion, fixed to the stator by means of the bolt and to the case of the engine by means of the bolt. Therefore, even when vibrations of the engine or the like occur, the accuracy of detection performed by the magnetic sensor element can be maintained.

The outer fixing portion is arranged adjacent to the windings of the stator and the permanent magnet of the rotor, and the bolt for fastening and fixing is attached to the outer fixing portion arranged in such a position. This makes it likely that the bolt for fixing the outer fixing portion is magnetized. Arranging the bolt close to the magnetic sensor element causes the magnetized bolt to affect the accuracy of detection performed by the magnetic sensor element. This is why the outer fixing portion is desirably arranged at as great a distance from the magnetic sensor element as possible from the viewpoint of improvement in the accuracy of detection.

In the rotating electric machine proposed in the Japanese Patent Application Laid-Open No. 2009-240071 mentioned above, the outer fixing portion is formed so as to protrude radially outward from the case main body in which the magnetic sensor elements are incorporated. In order to improve the accuracy of detection performed by the magnetic sensor element with avoidance of any influence from the magnetized bolt, it is necessary that the outer fixing portion to which the bolt is attached is arranged further radially outward. Arranging the outer fixing portion further radially outward, however, involves a problem that the size of the magnetic sensor unit increases.

In the technical background described above, there has been a demand for development of a rotating electric machine serving as a starter-generator including a magnetic sensor unit that is able to maintain an accuracy of detection performed by a magnetic sensor element, with a small size.

The above and other objects and advantageous effects of the present invention will become more apparent from the preferred embodiment described later.

In the following, a configuration of a rotating electric machine according to the present invention will be described.

A rotating electric machine according to the present invention includes: a stator configured to be fixed to an engine case of an engine unit; a rotor configured to be fixed to an end portion of a rotation shaft part of the engine unit; and a magnetic sensor unit configured to detect the rotational position of the rotor. The magnetic sensor unit includes a case main body in which a plurality of magnetic sensor elements are incorporated, an outer fixing portion for fixing the case main body to the engine case, and an inner fixing portion for fixing the case main body to the stator. With respect to a radial direction of the stator, the outer fixing portion is arranged outside an outer circumferential edge of the stator. With respect to a circumferential direction of the stator, the outer fixing portion is arranged further outside, among the plurality of magnetic sensor elements, a magnetic sensor element located outermost with respect to the circumferential direction.

Since, with respect to the circumferential direction, the outer fixing portion is arranged further outside the magnetic sensor element located outermost with respect to the circumferential direction, the dimension of the magnetic sensor unit can be kept small with respect to the radial direction. Additionally, a large distance can be ensured between the outer fixing portion and the magnetic sensor element while the dimension of the magnetic sensor unit is kept small with respect to the radial direction. This can maintain an accuracy of detection performed by the magnetic sensor element even when a bolt fastening the outer fixing portion is magnetized.

More specifically, a configuration may be acceptable in which the outer fixing portion is formed in an extension portion that extends in the circumferential direction from the case main body.

It may be acceptable that the outer fixing portion includes a first outer fixing portion provided in a first extension portion and a second outer fixing portion provided in a second extension portion, the first extension portion extending from the case main body toward one direction in the circumferential direction, the second extension portion extending from the case main body toward the other direction in the circumferential direction. Providing the outer fixing portions at two locations with respect to the circumferential direction enables a sensor case (i.e. the case main body) to be fixed in a more stable condition. Moreover, the sensor case (i.e. the case main body) is not required to have a high rigidity, and therefore can be thinned.

It may be acceptable that, with respect to the circumferential direction, the first outer fixing portion and the second outer fixing portion are arranged further outside, among the plurality of magnetic sensor elements, a first magnetic sensor element and a second magnetic sensor element, respectively, that are located outermost with respect to the circumferential direction.

It may be acceptable that: the magnetic sensor unit (for example, the case main body) includes an inward extension portion that extends from the case main body inwardly with respect to the radial direction; and the inner fixing portion is provided in an inner peripheral edge portion of the inward extension portion.

It may be acceptable that: the inner fixing portion includes first and second inner fixing portions that are provided in the inner peripheral edge portion of the inward extension portion, the first and second inner fixing portions being arranged in opposite end regions of the inner peripheral edge portion with respect to the circumferential direction.

It may be acceptable that the magnetic sensor unit further includes a leg part that extends from the case main body toward the stator, and the leg part is latched to the stator.

It is preferable that: the stator includes a cylindrical core part and a plurality of teeth that extend radially outward from the core part, the plurality of teeth being arranged at predetermined intervals with respect to the circumferential direction; and each tooth includes a pair of laterally protruding portions that are provided in a distal end portion of the tooth with respect to the radial direction, the pair of laterally protruding portions being provided at opposite sides of the distal end portion and extending in the circumferential direction. Additionally, a configuration is conceivable in which the leg part includes a leg main portion and a latch portion that is provided to a distal end portion of the leg main portion, the latch portion having a width smaller than the width of the leg main portion. In this configuration, the latch portion is fitted between, among the laterally protruding portions formed in pairs, the laterally protruding portions neighboring each other with respect to the circumferential direction, so that the position of the case main body is settled with respect to the circumferential direction. A step portion provided at the boundary between the leg main portion and the latch portion is latched to the neighboring ones of the laterally protruding portions formed in pairs, to hinder movement of the case main body in the axial direction.

It may be acceptable that the case main body includes a plurality of the leg parts, and the leg parts are arranged at regular intervals in the circumferential direction.

It is preferable that: each of the inner fixing portion and the outer fixing portion has a fastener reception hole; a fastener received through the fastener reception hole of the inner fixing portion fixes the case main body to the stator; and a fastener received through the fastener reception hole of the outer fixing portion fixes the case main body to the engine case.

Another embodiment of the present invention provides a saddle-ride type vehicle including an engine unit and a rotating electric machine with any of the above-mentioned features, the case main body being fixed to the stator via the inner fixing portion and fixed to the engine case via the outer fixing portion.

### [BRIEF DESCRIPTION OF THE DRAWINGS]

FIG. 1 is a cross-sectional view schematically showing a state where a rotating electric machine according to an embodiment of the present invention is mounted to an engine unit.
FIG. 2 is a perspective view of the rotating electric machine.
FIG. 3 is a perspective view showing a state where a magnetic sensor unit is assembled to a stator of the rotating electric machine.
FIG. 4 is a perspective view of the magnetic sensor unit.
FIG. 5 is a plan view showing the positional relationship between the magnetic sensor unit and the stator.

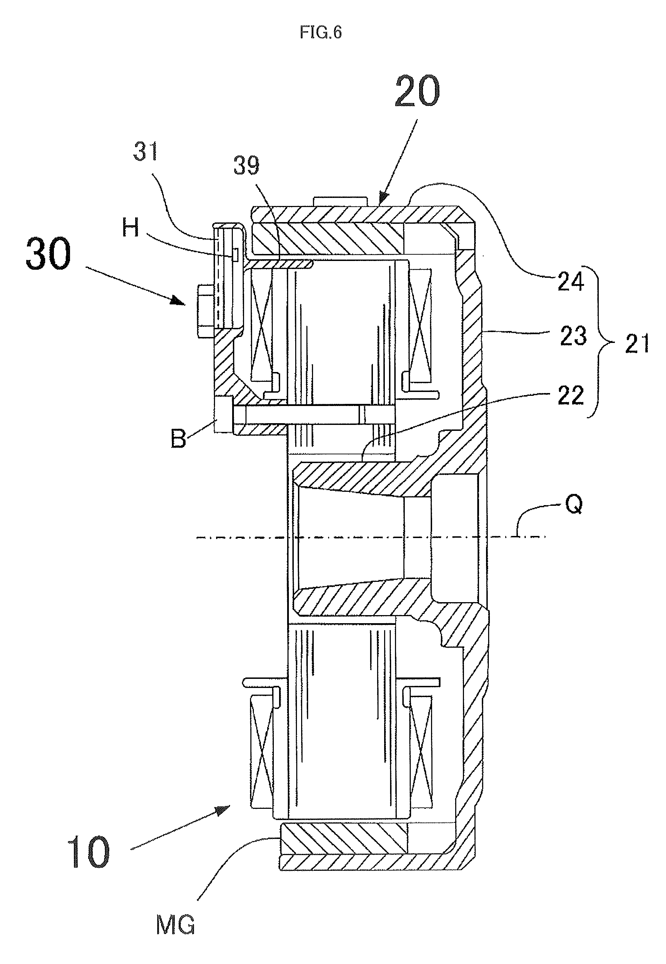

FIG. 6 is a cross-sectional view of the rotating electric machine.
FIG. 7 is a side view showing a state where leg parts of the magnetic sensor unit are latched to the stator.
FIG. 8 is a plan view showing a stator and a magnetic sensor unit of a rotating electric machine according to a second embodiment of the present invention.
FIG. 9 is a plan view showing a stator and a magnetic sensor unit of a rotating electric machine according to a third embodiment of the present invention.
FIG. 10 is a side view showing a variation of the structure for latching the magnetic sensor unit to the stator.

### [EMBODIMENTS FOR CARRYING OUT THE INVENTION]

Hereinafter, the present invention will be described based on a preferred embodiment with reference to the drawings.

A rotating electric machine according to this embodiment is suitable for use as a starter-generator SG that is mounted to an engine unit of various types of vehicles including saddle-ride type vehicles such as a motorcycle. The rotating electric machine serving as the starter-generator SG is coupled to a crankshaft of an engine, and, at a time of engine start, functions as a starter motor that rotates the crankshaft to start the engine. After the engine start, the rotating electric machine is rotated by the crankshaft, to function as a generator. Applications of the present invention are not limited to a starter-generator for an engine unit of a saddle-ride type vehicle. The present invention is applicable to various types of rotating electric machines.

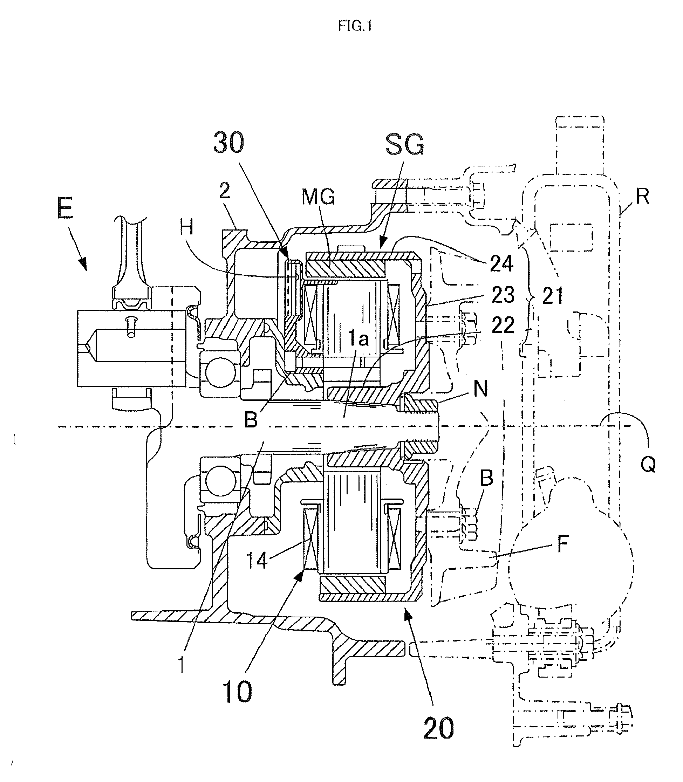

As shown in FIG. 1, the rotating electric machine serving as the starter-generator SG according to this embodiment is mounted directly to one end portion of a crankshaft 1 of an engine unit E. Here, it should be noted that the rotating electric machine of the present invention does not always need to be mounted directly to the crankshaft 1 of the engine unit E. In a conceivable example, the rotating electric machine may be coupled indirectly to the crankshaft 1 with interposition of a speed reduction mechanism. The engine unit E includes an engine case 2 that supports the crankshaft 1 in a freely rotatable manner.

One end portion 1a (in FIG. 1, a right end portion) of the crankshaft 1 extends out of the engine case 2 so that it protrudes outward. The starter-generator SG is mounted to the one end portion 1a of the crankshaft 1. The starter-generator SG constitutes the rotating electric machine of the present invention. A radiator R is arranged outside the starter-generator SG.

In the following, a detailed description will be given of a specific configuration of a rotating electric machine serving as the starter-generator SG. As shown in FIG. 1, the rotating electric machine includes a stator 10, a rotor 20, and a magnetic sensor unit 30 configured to detect the rotational position of the rotor 20.

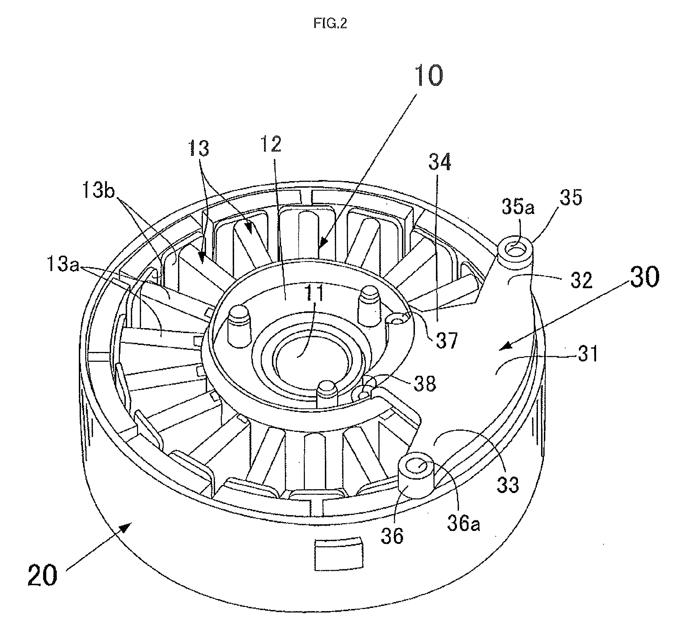

Referring to FIGS. 1 and 2, the rotor 20 includes a rotor main body 21 and a permanent magnet MG. The rotor main body 21 is, for example, in the shape of a cylinder with a bottom and made of a ferromagnetic material. The rotor main body 21 is configured to rotate on a rotation axis line Q. The rotor main body 21 includes a shaft-fixing boss portion 22 having a cylindrical shape, a bottom wall portion 23 having a disk-like shape, and a peripheral wall portion 24 having a tubular shape. The shaft-fixing boss portion 22 is fixed to the crankshaft 1 with the one end portion 1a of the crankshaft 1 being received in the shaft-fixing boss portion 22. The bottom wall portion 23, which is fixed to the boss portion 22, extends in a radial direction of the crankshaft 1. The peripheral wall portion 24 extends in an axial direction of the crankshaft 1 from an outer circumferential edge of the bottom wall portion 23 toward the engine unit E.

The one end portion 1a of the crankshaft 1 is received in the boss portion 22, and in this condition, a nut N is screwed onto a male thread formed in a distal end portion of the one end portion 1a of the crankshaft 1, as shown in FIG. 1. Thereby, the boss portion 22 is fastened and fixed to the crankshaft 1 such that the boss portion 22 is not rotatable relative to the crankshaft 1. Accordingly, the rotor main body 21, together with the crankshaft 1, rotates on the rotation axis line Q. As shown in FIG. 1, a cooling fan F is fixed to the exterior of the bottom wall portion 23 of the rotor main body 21 by means of a plurality of bolts B.

The permanent magnet MG is fixed to an inner circumferential surface of the peripheral wall portion 24 of the rotor main body 21. The permanent magnet MG is arranged in such a manner that the N pole and the S pole alternately appear with respect to a circumferential direction of the rotor main body 21. As the permanent magnet MG, a magnet such as a Neodymium bonded magnet may be suitably adopted that is obtained by solidifying a mixture of a powdered magnet and a plastic resin into a cylindrical shape and then magnetizing a resultant such that the N magnetic pole and the S magnetic pole alternately appear with respect to a circumferential direction as described above. Instead of such a bonded magnet, the permanent magnet MG may be one including a plurality of sintered magnet pieces arranged in the circumferential direction. In the present invention, the type of the permanent magnet, the shape of the permanent magnet, the number of magnetic poles of the permanent magnet, and the like, are not limited to the ones illustrated in this embodiment.

The rotor 20, which is mounted directly to the crankshaft 1 and configured to rotate together with the crankshaft 1 in the above-described manner, also functions as a flywheel of the engine unit E.

Referring to FIG. 2, the stator 10 is arranged concentrically within the rotor 20 having a cylindrical shape. The stator 10 is obtained by, for example, thin silicon steel plates being stacked in the axial direction. As shown in FIG. 2, the stator 10 includes a cylindrical core part 12 and a plurality of teeth 13. The cylindrical core part 12 has, in its central portion, a hole 11 whose inner diameter is larger than the outer diameter of the tubular boss portion 22 of the rotor 20. The plurality of teeth 13, which serve as salient poles, integrally extend radially outward from the core part 12. Each tooth 13 includes a main portion 13a and a pair of laterally protruding portions 13b provided in a distal end portion of the main portion 13a. The laterally protruding portions 13b extend in opposite directions with respect to a circumferential direction. As shown in FIG. 1, an armature winding 14 is wound around the main portion 13a of each tooth 13. In FIG. 2 and other drawings, for convenience of the illustration, the winding 14 is not shown.

Referring to FIG. 1, the magnetic sensor unit 30 is arranged between the rotor 20 and the engine case 2. The magnetic sensor unit 30 is configured to detect the rotational position of the rotor 20. The magnetic sensor unit 30 has a plurality of magnetic sensor elements H incorporated therein.

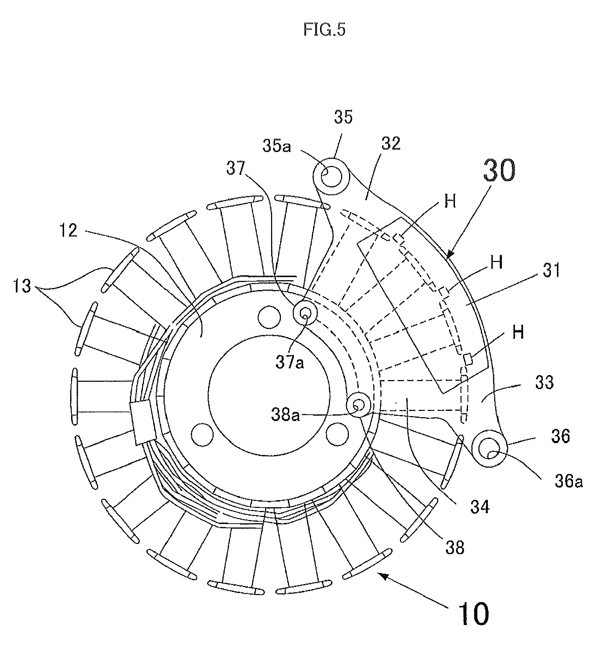

Referring to FIG. 5, the magnetic sensor unit 30 includes a case main body 31 in which the plurality of magnetic sensor elements H are incorporated. A first extension portion 32, a second extension portion 33, and an inward extension portion 34, which are integral with the case main body 31, extend out from the case main body 31. As shown in FIG. 5, the first extension portion 32 and the second extension portion 33 extend from the case main body 31 in the circumferential direction of the stator 10. The inward extension portion 34 extends from the case main body 31 in a direction radially inward of the stator 10. A first outer fixing portion 35 having a fastener reception hole 35a and a second outer fixing portion 36 having a fastener reception hole 36a are provided in end portions of the first extension portion 32 and the second extension portion 33, respectively. A first inner fixing portion 37 having a fastener reception hole 37a and a second inner fixing portion 38 having a fastener reception hole 38a are provided in an inner peripheral edge portion of the inward extension portion 34.

The first and second outer fixing portions 35 and 36 are used for fixing the magnetic sensor unit 30 to the engine unit E. The first and second inner fixing portions 37 and 38 are used for fixing the magnetic sensor unit 30 to the stator 10 of the rotating electric machine.

More specifically, as shown in FIGS. 2 and 5, the first and second inner fixing portions 37 and 38 are fastened and fixed to the core part 12 of the stator 10 by means of bolts B (see FIG. 1) that are received through the fastener reception holes 37a and 38a. In this embodiment, the magnetic sensor unit 30 is fixed to the stator 10 at two points in total. The two points are located in opposite end regions of the inner peripheral edge portion of the inward extension portion 34 with respect to the circumferential direction. Under the state where the magnetic sensor unit 30 is mounted to the stator 10 in the above-described manner, the first and second outer fixing portions 35 and 36 are located radially outside of the outer circumferential edge of the stator 10. The first and second outer fixing portions 35 and 36 are fastened and fixed to the engine case 2 of the engine unit E by means of bolts that are received through the fastener reception holes 35a and 36a.

In this embodiment, as described above, the magnetic sensor unit 30 is fixed to the stator 10 in the first and second inner fixing portions 37 and 38. As a result, the position of the case main body 31, and therefore the position of each of the magnetic sensor elements H incorporated therein, is settled with respect to the radial direction and the circumferential direction of the stator 10. The magnetic sensor unit 30 is fixed to the engine case 2 of the engine unit E in the first and second outer fixing portions 35 and 36. As a result, the position of each of the magnetic sensor elements H is settled with respect to the axial direction of the crankshaft 1, too.

Sometimes, for example in a case where the magnetic sensor unit 30 is made of a resin or the like being cast or in a case where the magnetic sensor unit 30 is thin, the rigidity thereof may be poor. In such a case, vibrations of the engine or the like may cause the case main body 31 having the magnetic sensor elements H incorporated therein to vibrate, resulting in a change in the axial positions of the magnetic sensor elements H and the rotor 20 relative to each other. The change in the relative positions affects the accuracy of detection of the rotational position of the rotor 20 detected by the magnetic sensor elements H.

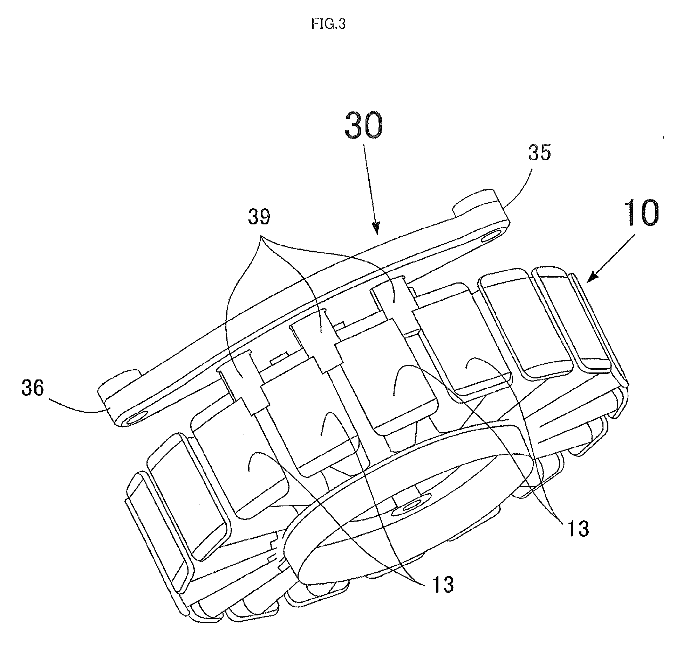

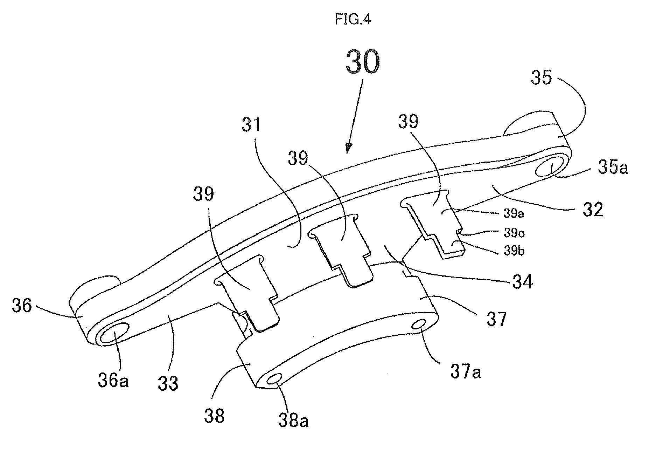

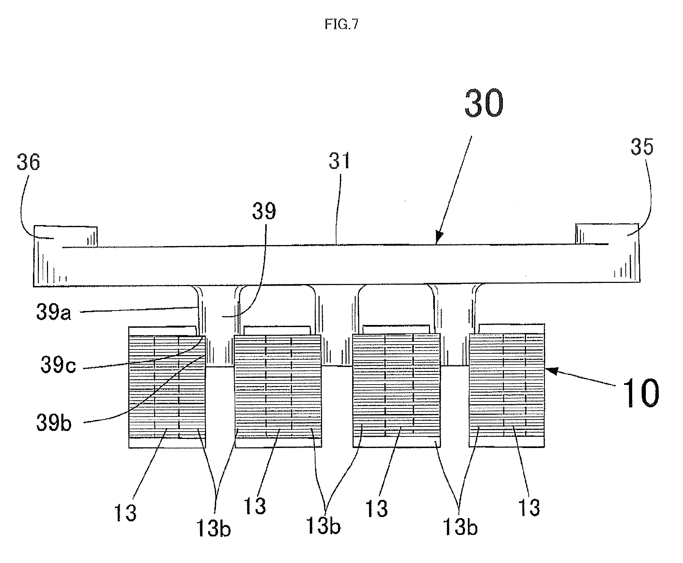

Therefore, in this embodiment, as shown in FIG. 4, three leg parts 39 are provided in total. The leg parts 39 are arranged side by side with respect to the circumferential direction. The leg parts 39 extend toward the stator 10 from a surface of the case main body 31 opposed to the stator 10. Each leg part 39 includes a leg main portion 39a and a latch portion 39b provided to a distal end portion of the leg main portion 39a. The latch portion 39b has a width smaller than the width of the leg main portion 39a. A step portion 39c is formed at the boundary between the leg main portion 39a and the latch portion 39b of each leg part 39. As shown in FIGS. 3 and 7, under the state where the magnetic sensor unit 30 is mounted to the stator 10, the latch portion 39b of each leg part 39 is fitted between the laterally protruding portions 13b of neighboring teeth 13. Thus, the position of the case main body 31 is settled with respect to the circumferential direction. Additionally, the step portion 39c formed at the boundary between the leg main portion 39a and the latch portion 39b is latched to neighboring laterally protruding portions 13b. Thus, the position of the case main body 31 is settled with respect to the axial direction, and consequently the positions of the magnetic sensor elements H incorporated in the case main body 31 are settled with respect to the axial direction.

Providing the leg parts 39 can further ensure that the position of the case main body 31 is settled with respect to the circumferential direction and the axial direction. This ensures that the magnetic sensor elements H incorporated in the case main body 31 are held in expected positions even when, for example, vibrations of the engine occur. Accordingly, even in a case where, for example, the case main body 31 is thinned so that its rigidity is reduced, the accuracy of detection performed by the magnetic sensor elements H can be kept high. As a result, further thinning of the magnetic sensor unit 30 is allowed.

Under the state where the magnetic sensor unit 30 is mounted to the stator 10 in the above-described manner, the first and second outer fixing portions 35 and 36 are located outside the case main body 31 with respect to the circumferential direction, as shown in FIG. 5. To be more specific, the locations of the first and second outer fixing portions 35 and 36 are further outside, with respect to the circumferential direction, of the location of, among the plurality of magnetic sensor elements H incorporated in the case main body 31, the magnetic sensor element H located outermost with respect to the circumferential direction. Each of the first and second outer fixing portions 35 and 36 is arranged at a position adjacent to the distal end portion of a corresponding tooth 13 of the stator 10. In other words, the first and second outer fixing portions 35 and 36 are arranged in such a manner that they do not protrude radially outward from the stator 10 to a large extent.

The first and second outer fixing portions 35 and 36 have the fastener reception holes 35a and 36a through which bolts are received, as mentioned above. The bolts are magnetized by magnetic fluxes of the permanent magnet MG of the rotor 20 and magnetic fluxes of the windings 14 of the stator 10. This is why the first and second outer fixing portions 35 and 36 are desirably positioned at as great a distance from the magnetic sensor elements H as possible. In this embodiment, with respect to the circumferential direction, the location of the first and second outer fixing portions 35 and 36 are further outside the location of, among the plurality of magnetic sensor elements H, the magnetic sensor element H located outermost with respect to the circumferential direction, as described above.

Accordingly, the outer fixing portions 35 and 36 are positioned at a sufficient distance from the magnetic sensor elements H. This can reduce an influence received from magnetization of the bolts serving as fasteners. Additionally, the outer fixing portions 35 and 36 are provided in the extension portions 32 and 33 that extend in the circumferential direction from the case main body 31. This can prevent the outer fixing portions 35 and 36 from protruding in the radial direction which undesirably causes a size increase. Thus, this embodiment achieves an improvement in the accuracy of detection without causing an increase in the size of the magnetic sensor unit 30.

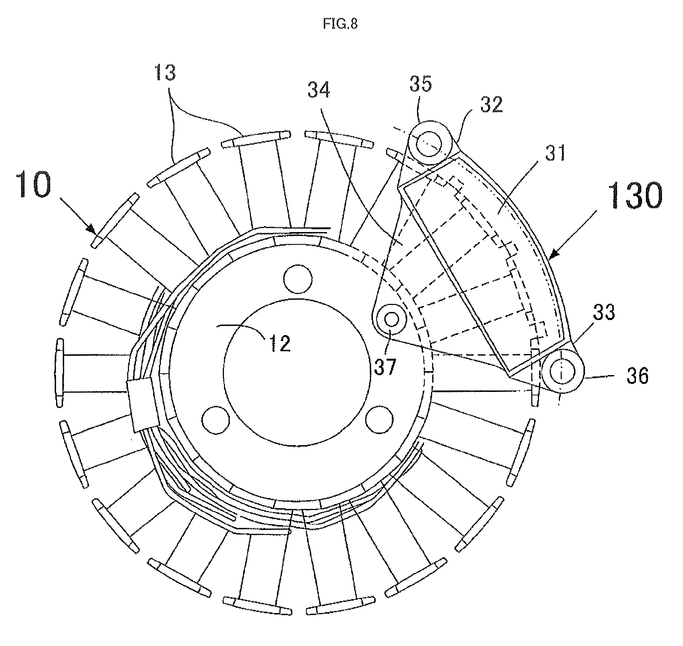

In the above-described embodiment, the first and second inner fixing portions 37 and 38 are provided radially inside of the magnetic sensor unit 30, and the magnetic sensor unit 30 is fixed at two points. However, the present invention is not limited to this configuration. For example, a magnetic sensor unit 130 according to a second embodiment shown in FIG. 8 is provided solely with the inner fixing portion 37 and therefore fixed at one point alone. The other parts of the configuration are identical to those of the first embodiment, and therefore a description thereof is omitted with the same reference sign being given to the identical parts.

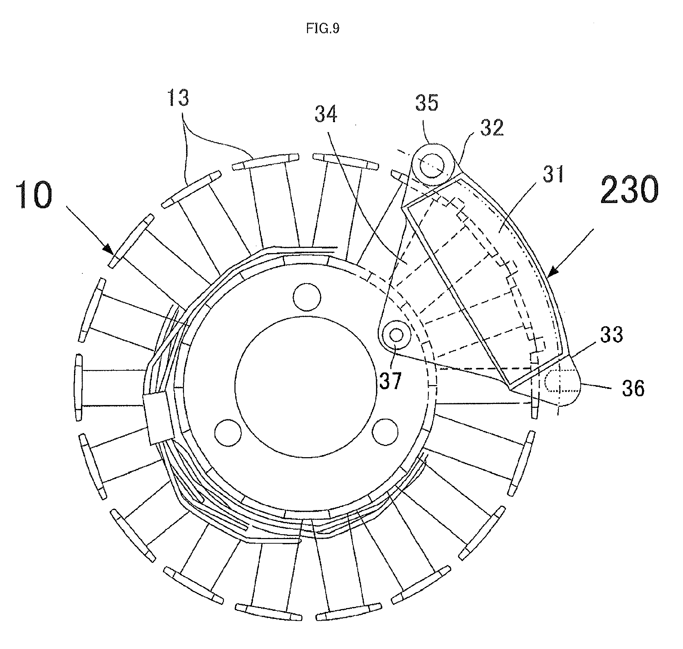

In the first and second embodiments, either of the magnetic sensor unit 30 and 130 is configured such that the outer fixing portions 35 and 36 having the fastener reception holes 35a and 36a are fixed to the engine by means of fasteners such as bolts. However, in the present invention, using fasteners such as bolts is not the only way of fixing. In a possible example, a magnetic sensor unit 230 according to a third embodiment shown in FIG. 9 is configured such that either one or both of the outer fixing portions 35 and 36 is/are fixed by means of swaging, a hook, a pin, or the like. The other parts of the configuration are identical to those of the first embodiment, and therefore a description thereof is omitted with the same reference sign being given to the identical parts.

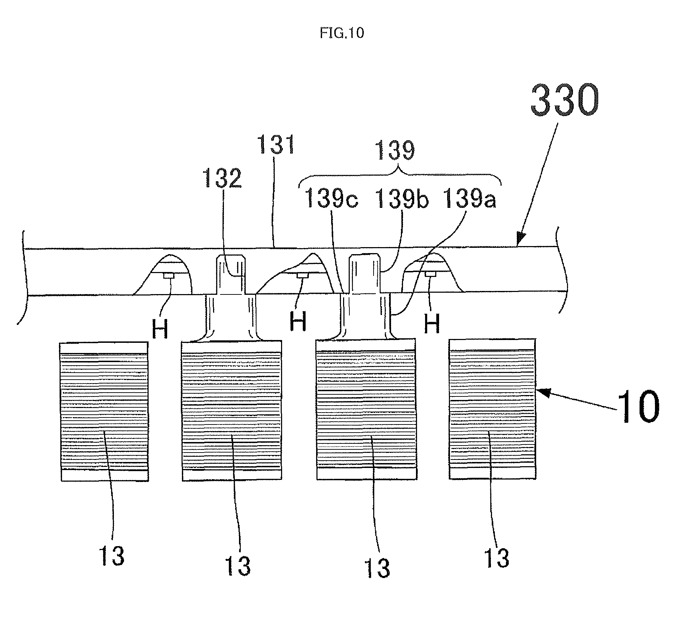

In any of the above-described embodiments, each of the leg parts 39 extending from the case main body 31 is latched to the laterally protruding portions 13b of neighboring teeth 13, so that the position of the case main body 31 is settled. Alternatively, it may be also acceptable that leg parts 139 are provided to the teeth 13 of the stator 10, as shown in FIG. 10. In an embodiment shown in FIG. 10, the leg part 139 extends from a side surface of each tooth 13 toward the magnetic sensor unit 330. The leg part 139 includes a leg main portion 139a and a latch portion 139b provided to a distal end portion of the leg main portion 139a. The latch portion 139b has a width smaller than the width of the leg main portion 139a. A step portion 139c is formed at the boundary between the leg main portion 139a and the latch portion 139b. Under the state where the magnetic sensor unit 230 is mounted to the stator 10, the latch portion 139b of each leg part 139 is inserted into a latch hole 132 provided in the case main body 131. Thus, the position of the case main body 131 is settled with respect to the circumferential direction. Additionally, the step portion 139c formed at the boundary between the leg main portion 139a and the latch portion 139b is latched to a circumferential edge of the latch hole 132. Thus, the position of the case main body 131 is settled with respect to the axial direction. The other parts of the configuration are identical to those of the first embodiment, and therefore a description thereof is omitted with the same reference sign being given to the identical parts.

In any of the embodiments described above, the magnetic sensor unit 30, 130, 230, 330 is fixed to the engine case 2 of the engine unit E at points of the two outer fixing portions 35 and 36. Fixing the magnetic sensor unit 30, 130, 230, 330 at two points enables more reliable and stable fixing. However, the present invention is not limited thereto. It may be also acceptable that only one outer fixing portion is provided for the purpose of fixing to the engine case 2 and the fixing is implemented by the one outer fixing portion alone.

The present invention is suitable for use as a starter-generator that is mounted to an engine of a motorcycle. However, applications of the present invention are not limited to a rotating electric machine serving as the starter-generator of this type. The present invention is applicable to various types of rotating electric machines included in various types of vehicles other than motorcycles.

It should be understood that the terms and expressions used herein are for descriptions and have no intention to be construed in a limited manner, do not eliminate any equivalents of features shown and mentioned herein, and allow various modifications falling within the claimed scope of the present invention.

The present invention may be embodied in many different forms. The present disclosure is to be considered as providing examples of the principles of the invention. A number of illustrative embodiments are described herein with the understanding that such examples are not intended to limit the invention to preferred embodiments described herein and/or illustrated herein.

While some illustrative embodiments of the invention have been described herein, the present invention is not limited to the various preferred embodiments described herein. The present invention includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### [INDUSTRIAL APPLICABILITY]

The present invention is suitable for use as a rotating electric machine serving as a starter-generator that is mounted to an engine of, for example, a motorcycle.

### [DESCRIPTION OF THE REFERENCE SIGNS]

- 1: crankshaft
- 1a: one end portion
- 2: engine case
- 10: stator
- 12: core part
- 13: teeth
- 13 b: laterally protruding portion
- 20: rotor
- 21: rotor main body
- 22: boss portion
- 23: bottom wall portion
- 24: peripheral wall portion
- 30, 130, 230, 330: magnetic sensor unit
- 31, 131: case main body
- 32: first extension portion
- 33: second extension portion
- 34: inward extension portion
- 35: first outer fixing portion
- 36: second outer fixing portion
- 37: first inner fixing portion
- 38: second inner fixing portion
- 35a, 36a, 37a, 38a: fastener reception hole
- 39: leg part
- 39a: leg main portion
- 39b: latch portion
- 39c: step portion
- E: engine unit
- H: magnetic sensor element
- MG: permanent magnet
- Q: rotation axis line
- SG: rotating electric machine

## Claims

1. A rotating electric machine comprising:
a stator (10) configured to be fixed to an engine case (2) of an engine unit (E);
a rotor (20) configured to be fixed to an end portion of a rotation shaft part (1) of the engine unit (E); and
a magnetic sensor unit (30, 130, 230, 330) configured to detect the rotational position of the rotor (20),
the magnetic sensor unit (30, 130, 230, 330) including
a case main body (3, 131) in which a plurality of magnetic sensor elements (H) are incorporated,
an outer fixing portion (35, 36) for fixing the case main body (3, 131) to the engine case (2), and
an inner fixing portion (37, 38) for fixing the case main body (3, 131) to the stator (10),
with respect to a radial direction of the stator (10), the outer fixing portion (35, 36) being arranged outside an outer circumferential edge of the stator (10), while with respect to a circumferential direction of the stator (10), the outer fixing portion (35, 36) being arranged outside, among the plurality of magnetic sensor elements (H), a magnetic sensor element located outermost with respect to the circumferential direction.

2. The rotating electric machine according to claim 1, wherein
the outer fixing portion (35, 36) is formed in an extension portion that extends in the circumferential direction from the case main body (3, 131).

3. The rotating electric machine according to claim 1, wherein
the outer fixing portion (35, 36) includes a first outer fixing portion (35) provided in a first extension portion (32) and a second outer fixing portion (36) provided in a second extension portion (33), the first extension portion (32) extending from the case main body (3, 131) toward one direction in the circumferential direction, the second extension portion (33) extending from the case main body (3, 131) toward the other direction in the circumferential direction.

4. The rotating electric machine according to claim 3, wherein
with respect to the circumferential direction, the first outer fixing portion (35) and the second outer fixing portion (36) are arranged further outside, among the plurality of magnetic sensor elements (H), a first magnetic sensor element and a second magnetic sensor element, respectively, that are located outermost with respect to the circumferential direction.

5. The rotating electric machine according to claim 1, wherein
the magnetic sensor unit (30, 130, 230, 330) includes an inward extension portion (34) that extends from the case main body (3, 131) inwardly with respect to the radial direction,
the inner fixing portion (37, 38) is provided in an inner peripheral edge portion of the inward extension portion (34).

6. The rotating electric machine according to claim 5, wherein
the inner fixing portion includes first and second inner fixing portions (37, 38) that are provided in the inner peripheral edge portion of the inward extension portion (34), the first and second inner fixing portions (37, 38) being arranged in opposite end regions of the inner peripheral edge portion with respect to the circumferential direction.

7. The rotating electric machine according to claim 1, wherein
the magnetic sensor unit (30, 130, 230, 330) further includes a leg part (39) that extends from the case main body (3, 131) toward the stator (10), and the leg part (39) is latched to the stator (10).

8. The rotating electric machine according to claim 7, wherein
the stator (10) includes a cylindrical core part (12) and a plurality of teeth (13) that extend radially outward from the core part, the plurality of teeth (13) being arranged at predetermined intervals with respect to the circumferential direction,
each tooth (13) includes a pair of laterally protruding portions (13b) that are provided in a distal end portion of the tooth (13) with respect to the radial direction, the pair of laterally protruding portions (13b) being provided at opposite sides of the distal end portion and extending in the circumferential direction,
the leg part (39) includes a leg main portion (39a) and a latch portion (39b) having a width smaller than the width of the leg main portion (39a), the latch portion (39b) being provided to a distal end portion of the leg main portion (39a),
the latch portion (39b) is fitted between, among the laterally protruding portions (13b) formed in pairs, the laterally protruding portions (13b) neighboring each other with respect to the circumferential direction, so that the position of the case main body (3, 131) is settled with respect to the circumferential direction,
a step portion provided at the boundary between the leg main portion (39a) and the latch portion (39b) is latched to the neighboring ones of the laterally protruding portions (13b) formed in pairs, to hinder movement of the case main body (3, 131) in the axial direction.

9. The rotating electric machine according to claim 7 or 8, wherein
the case main body (3, 131) includes a plurality of the leg parts (39), and the leg parts (39) are arranged at regular intervals in the circumferential direction.

10. The rotating electric machine according to any of claims 1 to 9, wherein
each of the inner fixing portion (37, 38) and the outer fixing portion (35, 36) has a fastener reception hole (35a, 36a, 37a, 38a),
a fastener received through the fastener reception hole (35a, 36a, 37a, 38a) of the inner fixing portion (37, 38) fixes the case main body (3, 131) to the stator (10),
a fastener received through the fastener reception hole (35a, 36a, 37a, 38a) of the outer fixing portion (35, 36) fixes the case main body (3, 131) to the engine case (2).

11. A saddle-ride type vehicle comprising:
an engine unit (E); and
the rotating electric machine (SG) according to any one of claims 1 to 10,
the case main body (3, 131) being fixed to the stator (10) via the inner fixing portion (37, 38) and fixed to the engine case (2) via the outer fixing portion (35, 36).
